Europäisches Patentamt

European Patent Office

Office européen des brevets

(19)

(11) **EP 1 249 697 A2**

(12) **EUROPEAN PATENT APPLICATION**

(43) Date of publication:
**16.10.2002 Bulletin 2002/42**

(51) Int Cl.7: **G01N 21/35**

(21) Application number: **02396051.1**

(22) Date of filing: **11.04.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **11.04.2001 FI 20010763**

(71) Applicant: **Suominen Nonwovens Ltd.
29250 Nakkila (FI)**

(72) Inventors:
• **Hautojärvi, Joni
29250 Nakkila (FI)**

• **Karjalainen, Jarmo
28400 Ulvila (FI)**
• **Utriainen, Mikko
50190 Mikkeli (FI)**
• **Huldén, Margareta
29270 Hormisto (FI)**
• **Rahkola, Mari
27400 Kiukainen (FI)**

(74) Representative: **Grew, Eva Regina et al
Oy Jalo Ant-Wuorinen Ab
Iso Roobertinkatu 4-6-A
00120 Helsinki (FI)**

(54) **Method for measuring the amount of spin finish on polymer fibers**

(57)    The present invention is directed on a method for measuring the amount of spin finish on a polymer filament or fiber, in a method wherein a filament tow is formed by melt spinning of polymer and an aqueous spin finish formulation is applied to the filament tow. According to the invention the moisture content of the filament tow is measured.

FIGURE 2.

EP 1 249 697 A2

## Description

## BACKGROUND OF THE INVENTION

Melt-spinning is a fiber production method, where polymer granulates are melted in an extruder and after which the melted polymers are pumped through a spinnerette having several thousands of holes with a typical diameter of 0.25 mm. After the extrusion the melted polymers solidify as continuous filaments by cooling in air. The filaments are chemically treated by applying a spin finish on the filament surface. The filament tow is then drawn in a heated drawing oven. The drawing ratio is specified by the ratio of the velocities of the second and the first godets used for drawing the filament tow. Usually, the drawn filament tow is finished again prior to crimping in a crimper. The crimped tow is dried in a drying oven and finally cut into staple fibers with a cutter. Synthetic staple fibers, such as polypropylene produced by the above described melt-spinning process, are commonly used as raw materials in the textile and nonwoven industry.

Production of synthetic fibers is not possible without the use of spin finish. Typically, an amount of 0.5 % of spin finishes, by weight of the fibers, has to be added to a polypropylene fiber surface in a staple fiber spinning process. There are several reasons for the chemical surface treatment of the filament tow. First, spin finishes are used in order to facilitate the spinning process by lubricating the fibers and making them antistatic. In addition, spin finishes are necessary when considering the further processing of the synthetic fibers into fibrous materials. Static charge and friction between metal and fibers tend to develop during transport of the fibers and also while carding the fibers in a high-speed carding machine to form a web. Secondly, the cohesion between fibers is also improved by utilizing chemical surface treatment. Finally, the wetting properties of the fibers have to be modified in order to meet the requirements for different end-use applications. By treating the fibers chemically the characteristics of the end product will also be adjusted. For example, nonwovens having hydrophobic properties can be utilized as a liquid barrier in hygienic products, such as disposable diapers.

The spin finishes to be applied are preferably conventional fiber finishes which are well known within the fiber industry. Generally, a spin finish is a mixture of surface-active agents containing cohesion agents, lubricants, antistatic agents, wetting agents and emulsifiers. The function of lubricants and cohesion agents is to reduce fiber-to-metal friction and to improve fiber-to-fiber cohesion by increasing fiber-to-fiber friction. The lubricants for fiber-to-metal surfaces are typically fatty acid esters, while the cohesion agents are ethoxylates of fatty acids. Antistatic agents reduce the build-up of static charge during fiber processing by providing a conductive layer on the fiber surface. The most commonly used antistatic agents in spin finishes are phosphate esters or quaternary amines. Wetting agents improve the wettability properties of the fibers by reducing the water contact angle on the fiber surface. Emulsifiers are used to create oil-in-water spin finish emulsions which can be diluted with water. Suitable spin finish formulations are available e.g. under the trade names Silastol (Schill & Seilacher GmbH & Co., Boeblingen, Germany), Cirrasol (Uniqema, London, UK) and Stantex (Cognis Deutschland GmbH, Düsseldorf, Germany).

The amount of spin finish on the fiber is one of the most important factors that have to be controlled at regular intervals during the production of synthetic fibers. The quantitative analysis of the spin finish content can not be underestimated because of the fact that even a small change in spin finish content can have a significant effect on the properties of the end product. In addition, the processability of the fibers can alter according to the amount of spin finish on the fiber. The uniform spreading of spin finish agents on the fiber surface is also an important factor affecting the quality of the end product.

Today, various analysis techniques exist for the measurement of the amount of spin finish on the fiber in the laboratory. Spin finishes are traditionally determined by gravimetric extraction methods, such as Soxhlet extraction, which comprises the extraction of the spin finish with an appropriate solvent and determination of the spin finish content by evaporating the solvent and weighing the residue. It is also possible to utilize an instrumental technique, such as infrared spectroscopy, in measuring the spin finish content from the above mentioned residue re-dissolved into a suitable solvent. Because of the fact that almost all finish components consist of molecules having carbon-hydrogen bonds, the peak absorbance of e.g. the carbon-hydrogen stretching vibration at a certain wave number in the infrared region is measured. In the case of infrared analysis, it has to be noted that the solvent employed should not contain any carbon-hydrogen bonds. A calibration curve is provided in order to determine the conversion function from absorbance to the concentration of finish in the solution. In practice, calibration is performed by preparing samples of known concentration, the absorbances of which are measured. Supercritcal fluid extraction is also an available method for spin finish analysis. The organic solvent used in Soxhlet extraction is replaced with unmodified supercritical $CO_2$ which results in a faster extraction time. In any case, extraction methods are very time consuming procedures and require the use of hazardous and expensive solvents. Another disadvantage is that a sample containing no spin finish has to be measured in order to eliminate the effect of other dissolved components, such as polymer additives. As regards sample preparation and handling, one of the simplest techniques to use is low resolution NMR spectrometry (Nuclear Magnetic Resonance). It is based on the different relaxation processes of the hydrogen atoms in either the liquid or solid phases of the sample when the sample is placed in a strong external magnetic field and excited by radio frequency pulses. NMR has to be calibrated by preparing standard samples with known amount of spin finish on fiber. There is also a need to perform a new calibration if changes in polymer matrix, spin finish content or production parameters have been made.

All the above mentioned techniques are useful in a laboratory scale where individual fiber samples are measured. However, it may take from hours to one day to get the results from a laboratory analysis and in the meantime the amount of spin finish can be outside accepted limits. It is also possible that a random sample taken from the production line for the laboratory test does not represent the whole production lot. Because of wasted time and/or misleading results, fibers of poor quality or in the worst case, end products of poor quality may have been produced. Thus, it is evident that on-line finish measurement is of great importance when considering process control in real time. An adjustment of the process parameters is reasonable only if a result indicating the tendency of a desired property, e.g. spin finish content, can be achieved immediately.

Only a few techniques exist for monitoring of the amount or uniformity of spin finish on fiber in real time. Dynamic fluorometry is a method applied in laboratory scale to evaluate the variation in finish coverage on textile yarns (Kokenes, S., et al., Chemical Fibers International, vol. 48 (1998), p. 325-327). There is a need to add a fluorescent tracer dye to the finish before it is applied to the yarn. Capacitance measurements have also been employed to detect changes in finish coverage according to the yarn length (Zürcher-Vogt, J., Chemiefasern/-Textilindustrie, vol. 41/93 (1991), p. 775-784). Another electric method used as a quality control method of yarn packages involves measuring the electrical resistance of the packages by means of two electrically conductive foamed plastic electrodes brought into contact with the package surface. The finish percentage is proportional to the measured reciprocal surface resistance of the package (Anon., International Fiber Journal, vol. 11 (1996), no. 5, p. 50-51).

United States Patent No. 6,025,727 discloses a method and device for detecting and quantifying the physical properties of fibers and like materials substantially in real time. The device uses an electrode driven at a discrete voltage to induce a current which changes in amplitude and/or phase in response to changes in denier, finish-on-yarn and/or interlacing of a fiber. An increase in percent finish-on-yarn corresponds to an increase in phase response. Absolute values for the percent finish-on-yarn can be determined by comparing the phase of the measured peak to previously correlated and calibrated values. The commercial instrument (Instrumar Ltd, St. John's Newfoundland, Canada) is capable of measuring the above described properties when the fiber diameter varies between 200 dtex and 1000 dtex.

In most cases the existing on-line techniques are valid for detecting changes in the properties of only an individual filament or yarn when the filament passes through the measurement system. In some cases the filament has to be in contact with the measuring sensors which in turn may have a disturbing effect on the whole production process. Hence, there is a need for such an on-line technique which is capable of measuring the amount of spin finish on fiber when thousands of filaments are produced at the same time. In addition, a measurement technique where the contact between the fibers and the measuring sensors is not needed is preferable.

According to the invention it has now been found that the amount of spin finish on fiber can be determined in real time by measuring the moisture content of the filament tow by using a spectroscopic technique well-known in the art.

SUMMARY OF THE INVENTION

The present invention concerns a method for determining the amount of spin finish on a synthetic polymer fiber and/or filament during melt-spinning by measuring the moisture content of the filament tow in real time during the production of the fibers or filaments. As the measurement technique, near-infrared reflectance (NIR) spectroscopy, which is well-known in the art, can be utilized in order to detect the signals according to which the amount of the absorbed water in the filament tow is determined.

The principle of the present invention is to measure the moisture content of the filament tow and determine the spin finish content from the linear relationship existing between the moisture content of the filament tow and the amount of spin finish on the filaments or on staple fibers obtained from the filaments in the method. The linear relationship between the moisture and spin finish content can be utilized also in the calibration stage of the instrument. It is possible to monitor the moisture and/or the spin finish content determined from the measured moisture value during production of the fibers. The point of measuring the moisture content is after the point of applying spin finish formulation, but before a step where moisture evaporates, such as the drying oven. The point of measurement can then be for example after application of the spin finish formulation, and before, such as just before a first set of godets for drawing the filament tow.

According to a preferred embodiment, the amount of spin finish on the fiber is controlled as an on-line measurement in which case it is possible to immediately detect disturbances related to the spin finishing process. This leads to two significant improvements to the current state of the art. First, the amount of spin finish on the fiber is monitored in real time, which is a decisive improvement when considering the influence of the spin finish on the properties of the end products produced from said fibers. A possible undesired situation where fibers are produced having too low or too high spin finish content can be avoided. This improves the processability of the fibers and the quality of the end-products. Second, by continuously monitoring the variations in the spin finish amount the fiber production process can be controlled. In practise, process control is effected by adjusting the parameters having an effect on spin finishing and preferably on the amount of spin finish on the fiber. As a result of these improvements, both staple fibers and end products having uniform quality can be produced. In addition, by optimising the amount of spin finish on the fiber, economical and environmental savings can be reached.

BRIEF DESCRIPTION OF THE DRAWINGS

Figure 1 is a schematic representation of a short-spinning process for the production of polypropylene filaments and staple fibers according to the present invention,

Figure 2 is a schematic representation of an embodiment of an on-line analyzer to be used according to the present invention,

Figure 3 is a graphical representation of the linear relationship between amount of moisture and amount of spin finish on the fiber in accordance with an embodiment of the present invention described in example 1,

Figure 4 is a graphical representation of the moisture values measured with the on-line analyzer in real time described in example 2, and

Figure 5 is a graphical representation of the linear relationship between the amount of moisture and amount of spin finish on the fiber described in example 2.

DETAILED DESCRIPTION OF THE INVENTION

According to a preferred embodiment, the present invention provides a method for measuring the amount of spin finish on synthetic fiber on-line during the production of the fibers. The method comprises the determination of the moisture content of the filament tow which in turn is used to determine the amount of spin finish on the filament and fiber. As the measurement technique, near-infrared reflectance (NIR) spectroscopy, well-known in the art, is preferably applied to carry out the on-line measurements. NIR is a commonly and widely used technique for measuring the moisture content of different materials. Typical applications include e.g. paper processing, manufacturing of chemicals and pharmaceutical powders and food processing. The main reason why NIR technique is very useful in moisture measurements is the fact that water molecules have strong absorption bands in the near-infrared region from 0.7 microns to 2.5 microns. Quantitative measurements are possible because the intensities of the absorption bands are proportional to the concentration of water molecules. Other well-known advantages of NIR analysis are that the results can be achieved rapidly, the sample is not damaged and there is no need to handle hazardous chemicals by the laboratory staff. The calibration of the NIR instrument requires the preparation of reference samples and analysis of the samples using an independent method in the laboratory. The correct calibration in the laboratory is essential for the accuracy of the further results obtained from the NIR measurements. All conditions should remain constant and comparable with the calibration conditions in the processing line during the trial wherefrom the reference samples are taken.

A typical near-infrared spectrometer is comprised of three basic components: a source to generate the NIR radiation, a monochromator to provide a narrow band of wavelengths and a detector to measure the radiation after interaction with the sample. A multi-channel detector technique with at least two channels can be used enabling the simultaneous measurement at each wavelength. In the case of moisture measurement, one channel is for water monitoring and the other is a baseline channel. For example, a water absorption band which occurs at 1.45 microns can be utilized in the moisture measurements. Four channel instruments are common as well, providing a possibility to select more wavelengths for the measurement. In addition, the FTNIR (Fourier Transform NIR) technique is also suitable for on-line moisture analysis. FTNIR enables the whole spectrum over the near-infrared region to be measured simultaneously.

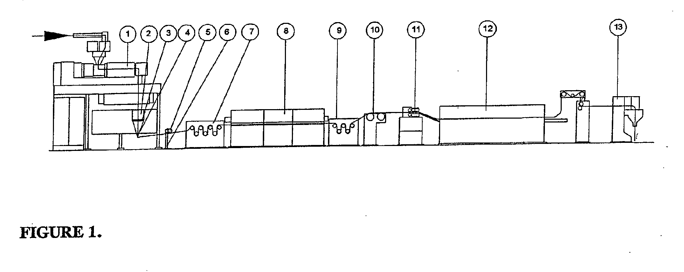

In Figure 1 is shown a line for the production of polyolefin fibers where an instrument for monitoring the amount of spin finish on fiber is mounted. In the short-spinning line shown in figure 1, polymer granulates are fed to an extruder (1) after which the melted polymer is pumped through a spinnerette (2) having plurality of orifices with a diameter varying typically between 0.1 and 1.0 mm. Polymer filaments forming a filament tow (4) are drawn from the spinnerette (2) with a first set of godets (7). After the spinnerette (2), the polymer filaments are quenched and a spin finish is applied to the filament tow (4) with a kiss-roll applicator (3). An instrument (5) for monitoring the amount of spin finish on the fiber is mounted in the line just before the first set of godets (7). The instrument (5) can be easily moved to the side or away from the production line as needed by means of a moving girder (6). There is no contact between the filament tow (4) and the instrument (5). The filament tow (4) is drawn in a drawing oven (8) with second set of godets (9) after which it is re-finished with spin finish in a kiss-roll applicator (10) and crimped in a crimper (11). The crimped filament tow is dried in a drying oven (12) and finally cut into staple fibers in a cutter (13). It should be observed that other fiber spinning techniques, such as long-spinning, can also be used for the production of polyolefin fibers.

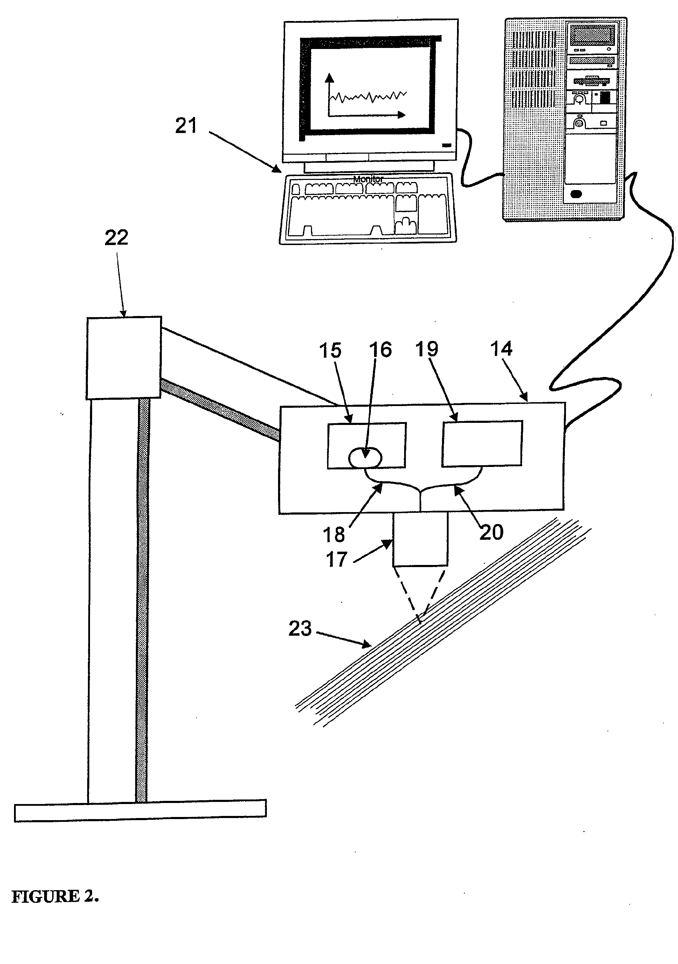

Figure 2 shows schematically a typical on-line spectrometer used as an on-line analyzer. The parts are as follows: (14) instrument housing, (15) illumination unit, (16) radiation source, (17) probe, (18) transmitting optical fiber, (19) detection unit, (20) receiving optical fiber and (21) computer system. The instrument housing (14) includes all the parts mentioned above except the computer system (21) which can be placed separated from the production line so that the monitoring can be done off-line e.g. in a control room. The probe (17) can be mounted to the instrument housing (14). The instrument housing (14) is mounted to a moving girder (22) which in turn controls the movement of the instrument housing (14) to the defined position above the filament tow (23), such as 5.0 cm above the tow. It should be noted that the measurement can be done below the filament tow (23) as well. Light from the radiation source (16) is introduced into the transmitting optical fiber (18) which in turn carries the light to the probe (17), where the light irradiates the filament tow (23). Light reflected from the filament tow (23) is received by the probe (17) and by the receiving optical fiber (20) which in turn carries the reflected light back to the detection unit (19) in the instrument housing (14). The detected signals are then analysed in order to determine the amount of moisture in the filament tow by well-known mathematical processes. The result can be displayed as the percentage of moisture or/and as the percentage of spin finish on the fiber. The spectrometer is controlled through an external computer system that is placed e.g. close to the other control devices.

The application of NIR technique to on-line measurement requires a calibration stage where a series of samples having a range of different spin finish contents are produced according to variations that would normally occur in the fiber spinning process. At the same time, the near-infrared spectrum is recorded with the on-line analysis instrument. The samples are analysed in a laboratory by using a method suitable for the moisture content determination. In addition, the amount of spin finish on the samples is measured in order to define the relationship between the moisture and spin finish contents. A typical mathematical method that can be used to derive the prediction equation between the NIR and the laboratory data is linear least squares regression analysis. The prediction equation can have e.g. the following form:

$$C = K_0 + \sum_{n=1}^{k} K_n \times \alpha_n \; ,$$

where C is the moisture content, $K_0$-$K_n$ are the regression coefficients, and $\alpha_n$ is absorbance measured at wavelength $\lambda_n$. In practice, during the calibration stage, parameters such as the spin finish content, the drawing speed of the first godets and the distance between the probe and the filament tow can be changed. The most important parameter is the amount of spin finish on the fiber which can be varied e.g. by changing the speed of the kiss-roll applicator. It should be noted that the ratio of the water and the active spin finish component in the spin finish formulation applied has to remain unchanged. The main idea of the calibration stage is to take into consideration as many variations as possible taking place during the production of staple fibers. Another important issue is related to the choice of the laboratory analysis method contributing to the accuracy of the whole calibration procedure and the results obtained in further on-line measurements. Errors arising from measurements in the laboratory tests can be reduced by performing repeated analyses of calibration samples. Before and during the calibration stage and also during the continuous monitoring with the NIR analyzer, the response from a reference sample can be measured and recorded in a computer as a reference file. The reference signal can be used to divide the signal from the real sample mathematically in order to avoid possible errors associated with contamination of instrument optics. It should be noted that if changes occur in the fiber processing line after the calibration stage, e.g. a completely different spin finish is taken in use or a process parameter is adjusted again, a new calibration has to be performed.

The present invention takes the advantage of the linear relationship between the moisture and spin finish contents on a filament or fiber, when using an aqueous spin finish formulation during the melt spinning. The spin finish content can be determined by measuring the moisture content by using a well-known optical method, preferably near-infrared reflectance spectroscopy. At the same time, the moisture content can be used to determine the amount of spin finish on the fiber in real time. The equation between moisture and spin finish content obtained by using linear least squares regression analysis is the following:

*Spin finish-% = A × (moisture-%) + B,*

where A and B are constants. The accuracy of the linear regression related to the measurement points is defined by the correlation coefficient $R^2$. It should be noted that when the relationship between the moisture and spin finish content has been determined, the calibration stage in the laboratory can be carried out by measuring the amount of spin finish on the fiber instead of the moisture content. As far as laboratory test methods are concerned, it is believed that the amount of spin finish can be analysed more accurately than the moisture content due to possible errors caused by evaporation of absorbed water from the reference samples.

The uniform spreading of the spin finish on the fiber surface can also be evaluated by using the present invention. In that case, the instrument parameters are defined to measure data with short time intervals, such as one second between individual measuring points. The standard deviation of the measured values indicates how uniformly the spin finish has spread on the fiber. Smaller standard deviation means more uniform spreading. This kind of analysis would require excessive time if carried out in a laboratory. However, the possibility to make incorrect conclusions exist because only a few samples can be studied in the laboratory. It is believed that by utilizing the present invention more realistic results are achieved.

It has now been found that a suitable method for determining the amount of spin finish on fiber as an on-line analysis comprises measuring the moisture content of the filament tow. It has been shown that the moisture content correlates well to the amount of spin finish on the fiber. By taking advantage of the specific relationship between these properties, an on-line analyzer, such as near-infrared spectrometer, can be calibrated to monitor the spin finish amount as a continuous process during production of the fibers. As a result, the quality of both the staple fibers and the end product is controlled and adjusted as needed in real time. An obvious improvement is that the results are achieved immediately and there is no necessity to wait until the results from the laboratory tests are ready which may take from hours to a day. The results obtained as an on-line measurement represent the entire production lot so that the overall result is comprehensive enough when compared to laboratory tests where only random samples are studied. In addition, optimization of the spin finish level results in both economical and environmental savings because production of fiber lots having too much spin finish on fiber can be avoided.

EXAMPLES

The following examples illustrate, but do not limit, the basic features of the present invention. The test methods listed below were employed to characterize the fibers in the examples:

Determination of the amount of spin finish on fiber in the laboratory

The amount of spin finish on fiber was determined by the following procedure: 3 g of the fibers was extracted with 150 ml of diethyl ether. After the extraction, the diethyl ether was evaporated and the residue was dissolved into 10 ml of carbon tetrachloride. The concentration of the spin finish in the solution was analysed with a Perkin Elmer "Spectrum 1000" FT-IR spectrometer by monitoring the height of the IR absorption peak at 1738.7 cm$^{-1}$ (corresponding to the C=O bond). The result indicating the amount of spin finish is an average of at least two individual samples.

Determination of the moisture content of fibers in laboratory

The moisture content of the reference samples was determined by the following procedure: a tow sample having a dry weight about 30 g and a length about 10 m was weighed in heated glass bowl to a constant weight. After the weighing, the sample was dried in an oven at 105 °C overnight, cooled to a constant weight in an exsiccator and weighed again. The moisture content was calculated from the decrease in weight. The result indicating the moisture content is an average of at least two individual samples.

**Example 1**

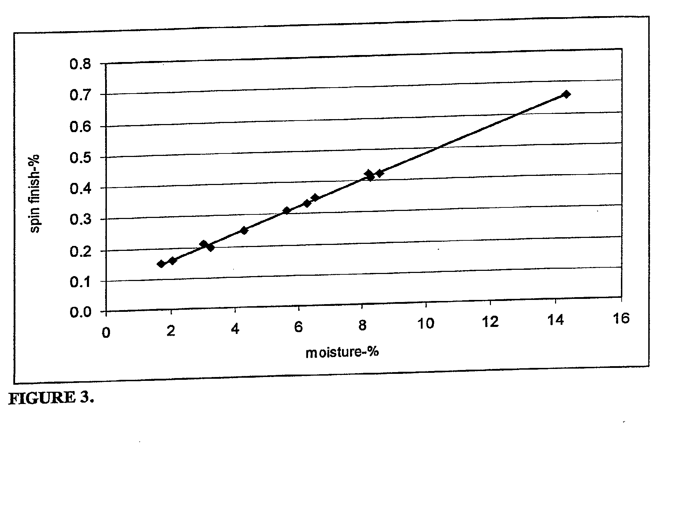

A polypropylene fiber tow containing 30500 filaments was extruded in the compact spinning line shown in Figure 1. The samples were taken before the first set of godets (shown as (7) in Fig. 1). The amount of spin finish on fiber was varied by changing the speed of the kiss-roll applicator. The ratio between the water and the active spin finish component remained unchanged. The amount of spin finish on fiber and the moisture content of the fibers were studied in the laboratory using the above described methods. The relationship between the amount of spin finish and the moisture content is shown in Figure 3. Figure 3 indicates that the relationship between these properties is linear. The equation obtained by using linear least squares regression analysis is the following:

$$\text{Spin finish-\%} = 0.0406 \times (\text{moisture-\%}) + 0.0790$$

The correlation coefficient $R^2$ indicating the accuracy of the linear regression is 0.998. According to the results it can be concluded that it is possible to determine the amount of spin finish on fiber by measuring the moisture content of the filament or fibers.

**Example 2**

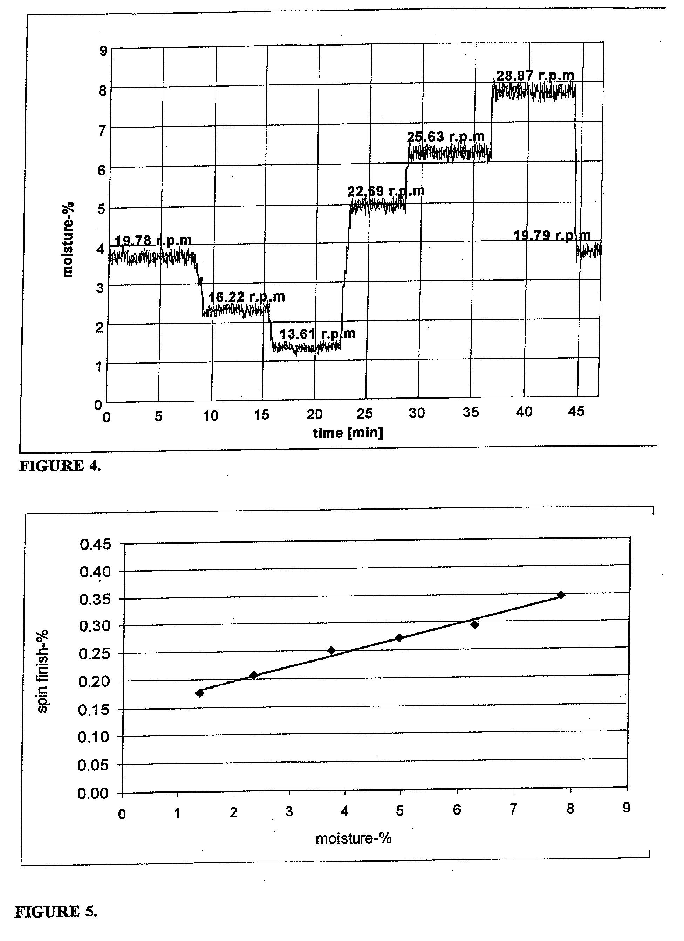

In this example, 1.7 dtex polypropylene staple fibers were produced with the compact spinning line shown in Figure 1. Referring to Figure 1, the on-line analyzer (5) was placed before the first set of godets (7). The amount of spin finish on fiber was varied by changing the speed of the first kiss-roll applicator (3). Staple fibers were taken after the cutter (13) in order to be analysed in the laboratory. The change in the moisture content due to the changes in the speed of the kiss-roll applicator during the trial is shown in Figure 4. The speed of the kiss-roll applicator varied between 13.6 r.

p.m and 28.9 r.p.m. By decreasing the speed of the kiss-roll applicator, the moisture content and the amount of spin finish on the fiber as well are decreased. The time period between the measurement points is one second. Figure 4 represents a continuous on-line measurement and the moisture values monitored during the trial are shown in the graph.

The staple fiber samples taken each time after the speed of the kiss-roll applicator was changed were analysed in the laboratory by using the above described method. The relationship between the amount of spin finish on the staple fibers and the moisture content measured with the on-line analyzer is shown in Figure 5. The moisture content value is taken as an average of the measurement points. Figure 5 indicates that the relationship is linear and the equation obtained by using linear least squares regression analysis is the following:

$$\text{Spin finish-\%} = 0.0251 \times (\text{moisture-\%}) + 0.1472$$

The correlation coefficient $R^2$ indicating the accuracy of the linear regression is 0.986. The results in this example clearly indicate that the amount of spin finish on fiber can be determined by measuring the moisture content with the on-line analyzer. It should be noticed that the amount of spin finish on fiber could have been monitored directly as well because the on-line analyzer had already been calibrated. The purpose of this example is to indicate that the moisture content of the filament tow and the amount of spin finish on the staple fibers have a linear relationship as well.

**Claims**

1. Method for measuring the amount of spin finish on a polymer filament or fiber, in a method wherein a filament tow is formed by melt spinning of polymer and an aqueous spin finish formulation is applied to the filament tow, **characterized in that** the moisture content of the filament tow is measured.

2. The method according to claim 1, wherein the moisture content of the tow is measured on-line during production.

3. The method according to claim 1 or 2, wherein the moisture content is measured with NIR- or FTNIR spectroscopy.

4. The method according to any one of the claims 1 to 3, wherein the moisture content is expressed as spin finish content on the filament or fiber.

5. The method according to any one of the preceding claims, wherein the measured water and/or spin finish content is used to control the amount of spin finish formulation applied to the filament tow.

6. The method according to any one of the preceding claims which includes a step of drying the filament tow, wherein the moisture content is measured from the filament tow at a point in the production line after application of the spin finish formulation before the drying step.

7. The method according to claim 6, wherein the moisture content is measured before a first set of godets used for drawing the filament tow.

8. The method according to any one of the preceding claims, wherein the polymer is a polyolefin, for example polypropylene.

9. The method according to any one of the preceding claims, wherein the moisture measurement is carried out at intermittent intervals, in order to determine the uniformity of the spin finish on the filament or fiber.

10. A method for production of polymer filaments and/or fibers comprising the steps of

    - extruding molten polymer to form a filament tow
    - applying an aqueous spin finish formulation to the filament tow, and
    - optionally crimping the filaments and cutting the same to form staple fibers,

    the method comprising the further step wherein the amount of spin finish on filament or fiber is determined by measuring the moisture content of the filament tow.

11. The method according to claim 10 comprising a step of drying the filament tow, and measuring the moisture content of the filament tow after application of the spin finish formulation but before drying.

12. The method according to claim 10 or 11, comprising a step of drawing the filament tow, and measuring the moisture content of the filament tow before drawing.

13. The method according to claim 10, 11 or 12, comprising the further step of drawing the filament tow and applying spin finish formulation to the filament tow after drawing.

14. A production line for the production of polymer filaments or fibers comprising

    - means for extruding molten polymer to form a filament tow
    - means for applying an aqueous spin finish formulation to the filament tow, and
- optionally means for crimping the filaments and cutting the same to form staple fibers,

**characterized in that** it comprises means for measuring the moisture content of the filament tow in order to determine the amount of spin finish on the filaments or fibers.

15. The production line according to claim 14, wherein the means for measuring the moisture content is a NIR- or FTNIR-analyzer.

16. The production line according to claim 14 or 15, wherein the production line comprises means for drawing the filament tow, the means for measuring the moisture content being mounted after the means for applying spin finish formulation but before the drawing means.

**FIGURE 1.**

**FIGURE 2.**

**FIGURE 3.**

**FIGURE 4.**

**FIGURE 5.**